# EUROPÄISCHE PATENTANMELDUNG

(11) **EP 3 054 438 A1**
(43) Veröffentlichungstag der Anmeldung: **10.08.2016**
(21) Anmeldenummer: 15153862.6
(22) Anmeldetag: 04.02.2015
(51) Int. Cl.: G09B 23/28, G09B 7/02, G09B 23/30

(54) **Vorrichtung und Verfahren zur Simulation von Ultraschall-Untersuchungen**

(71) Anmelder: Medarus KG Dr. Ebner GmbH & Co., 74547 Untermünkheim (DE)
(72) Erfinder:
(74) Vertreter: Beyer, Carsten

(57) **Zusammenfassung**

Im Hinblick auf einen Beitrag zu einer verbesserten Ausbildung von Fachleuten für die Durchführung von Ultraschall-Untersuchungen wird vorgeschlagen eine Vorrichtung zur Durchführung einer Simulation einer Ultraschall-Untersuchung, wobei die Vorrichtung ein mobiles Endgerät aufweist, und wobei das mobile Endgerät umfasst: eine Eingabeeinrichtung und eine Anzeigeeinrichtung; einen Bewegungssensor; einen Speicher; einen Prozessor; ein Computerprogramm, welches in den Speicher des mobilen Endgeräts geladen ist, und welches im Betrieb der Vorrichtung durch den Prozessor mit den folgenden Schritten ausgeführt wird: durch den Bewegungssensor erfolgende Bestimmung der derzeitigen Lage und der derzeitigen Bewegung der in der Hand eines Benutzers gehaltenen und damit geführten Vorrichtung; Erzeugen eines aktuellen virtuellen Ultraschallbildes abhängig von der derzeitigen Lage und/oder der derzeitigen Bewegung der Vorrichtung und/oder einer aktuellen Eingabe seitens des Benutzers; Anzeige des aktuellen virtuellen Ultraschallbildes auf der Anzeigeeinrichtung. Des Weiteren wird ein entsprechendes Verfahren zur Durchführung einer Simulation einer Ultraschall-Untersuchung vorgeschlagen.

## Beschreibung

Im Rahmen der vorliegenden Erfindung werden eine Vorrichtung sowie ein Verfahren zur Durchführung einer Simulation einer Ultraschall-Untersuchung vorgeschlagen. Des Weiteren betrifft die Erfindung ein Computerprogramm sowie ein Computerprogrammprodukt zur Durchführung einer Simulation einer Ultraschall-Untersuchung.

In der medizinischen bildgebenden Diagnostik ist die Ultraschall-Untersuchung eine kostengünstige, wenig schädliche Untersuchungsmethode. Des Weiteren sind Ultraschall-Untersuchungen zur Materialprüfung und für vielfältige weitere Einsatzzwecke bekannt.

Durch die technische Weiterentwicklung in den letzten Dekaden auf Seiten der Ultraschall-Geräte, sowie auf dem medizinischen Wissen ist die Qualität der Untersuchung bzw. der daraus resultierenden Diagnose und Therapie sehr von den Fähigkeiten des Untersuchers abhängig. Hierin unterscheidet sich die Ultraschall-Untersuchung wesentlich von den alternativen bildgebenden Verfahren. Im Gegensatz zu MRT, CT oder Röntgenuntersuchungen sind die durch die Ultraschall-Untersuchung gewonnenen Bilder nur in Zusammenschau mit dem Patienten gut verwertbar.

Die derzeitigen Ausbildungskonzepte beruhen auf Vermittlung von theoretischen Kenntnissen in Kursen, praktischen Übungen an Simulatoren und der Übermittlung von entsprechenden Normbildern.

Die verwendeten Ultraschall-Simulatoren greifen je nach Fragestellung auf entsprechende, aufgezeichnete Patientenbilder zu. Die Zuordnung der Bilder zum Ultraschallkopf erfolgt über ein anatomisches Modell, welches mit entsprechenden Sensoren ausgestattet ist, bzw. werden reale Patienten mit entsprechenden Befunden benötigt, welche sich freiwillig für einen Ausbildungskurs zur Verfügung stellen.

Die Wiedergabe von aufgezeichneten originalen Patientenbildern auf einem PC/Ultraschallmonitor entspricht dem aktuellen Stand der Technik. Für spezielle Fragestellungen (z.B. vaginaler Ultraschall) existieren entsprechende Untersuchungsmodelle.

Eine bekannte Vorrichtung zur Durchführung einer Simulation einer Ultraschall-Untersuchung ist offenbart (Abrufdatum 29.01.2015) gemäß: http://www.sonofit.de/pdf/Sonofit_Flyer_Medica_2013_deutsch.pdf

Die Nachteile des aktuellen Standes sind neben der Unhandlichkeit der Simulatoren (Ultraschall-Gerät, PC, Patientensimulator) deren Kosten, welche dafür sorgen, dass diese Geräte verständlicherweise lediglich in Kliniken oder ggf. in Universitäten bereitstehen. Viele Lernende müssen sich dabei einen Simulator teilen, ein Üben ist nur für kurze, festgelegte Zeiten möglich. Ein eigenständiges Üben und Repetieren des Lernenden in seiner Freizeit ist dabei unmöglich, da dann kein Zugang zu einem Simulator besteht.

Stellen sich reale Patienten zur Verfügung, kann der Lernende an dieser Übung nur den einen Befund des Patienten erkennen und die Darstellung üben. Dies ist für ein bis zwei Lernende durchaus praktikabel und entspricht der Ausbildung im klinischen Alltag. Dieses Konzept ist jedoch nicht auf Kurse übertragbar, da hier 10-20 Personen jeweils den Ultraschall üben möchten. Somit kann die fehlende, zeitlich unbeschränkte Reproduzierbarkeit der Befunde als weiterer Nachteil der bestehenden Situation angemerkt werden.

Weiter können bei der Simulation am Patienten dem Lernenden die motorischen Handgriffe nur durch 'Hands-on' Training durch einen erfahreneren Ultraschallbenutzer (i.A. ein erfahrener Arzt) beigebracht werden. Die unmittelbare Erfolgskontrolle ist somit Ressourcen aufwendig und daher ebenfalls als nachteilig zu bewerten.

Ein wünschenswerter Ultraschall-Simulator sollte jedoch eine Repetition der verschiedensten Befunde zu jeder Zeit, unabhängig vom Ort und verfügbaren personellen Ressourcen ermöglichen. Die Rückmeldung über die korrekten "Normbilder" sollte unmittelbar erfolgen. Das feinmotorische Training des Lernenden sollte unterschwellig durch Repetition an verschiedenen Befunden erfolgen.

Der vorliegenden Erfindung liegt folglich die Aufgabe zugrunde, zumindest einen der oben benannten Nachteile zu lindern.

Des Weiteren liegt der Erfindung die Aufgabe zugrunde, einen Beitrag zu einer verbesserten Ausbildung in Bezug auf Ultraschall-Untersuchungen zu leisten.

Des Weiteren liegt der Erfindung die Aufgabe zugrunde, eine kostengünstige, breit verfügbare und gleichzeitig realistische Simulation von Ultraschall-Untersuchungen zu ermöglichen.

Einen Beitrag zur Lösung mindestens einer der vorstehend genannten Aufgaben leistet eine Vorrichtung zur Durchführung einer Simulation einer Ultraschall-Untersuchung mit den Merkmalen des Anspruchs 1.

Vorteilhafte Ausgestaltungen und Weiterbildungen der erfindungsgemäßen Vorrichtung ergeben sich aus den hierzu nachgeordneten Ansprüchen.

Einen Beitrag zur Lösung mindestens einer der vorstehend genannten Aufgaben leistet ferner ein Verfahren zur Durchführung einer Simulation einer Ultraschall-Untersuchung mit den Merkmalen des Anspruchs 7.

Ferner wird mit den Merkmalen des Anspruchs 14 ein Computerprogramm für die erfindungsgemäße Vorrichtung bzw. zur Durchführung des erfindungsgemäßen Verfahrens vorgeschlagen, ein entsprechendes Computerprogrammprodukt ist durch die Merkmale des Anspruchs 15 definiert.

Vorteilhafte Ausgestaltungen und Weiterbildungen der obigen weiteren Aspekte der Erfindung ergeben sich aus den hierzu jeweils nachgeordneten Ansprüchen.

Im Rahmen der vorliegenden Erfindung wird zunächst eine Vorrichtung zur Durchführung einer Simulation einer Ultraschall-Untersuchung mit den Merkmalen des Anspruchs 1 vorgeschlagen, wobei die Vorrichtung ein mobiles Endgerät aufweist, und wobei das mobile Endgerät umfasst: eine Eingabeeinrichtung und eine Anzeigeeinrichtung; einen Bewegungssensor; einen Speicher; einen Prozessor; ein Computerprogramm, welches in den Speicher des mobilen Endgeräts geladen ist, und welches im Betrieb der Vorrichtung durch den Prozessor mit den folgenden Schritten ausgeführt wird: durch den Bewegungssensor erfolgende Bestimmung der derzeitigen Lage und der derzeitigen Bewegung der in der Hand eines Benutzers gehaltenen und damit geführten Vorrichtung; Erzeugen eines aktuellen virtuellen Ultraschallbildes abhängig von der derzeitigen Lage und/oder der derzeitigen Bewegung der Vorrichtung und/oder einer aktuellen Eingabe seitens des Benutzers; Anzeige des aktuellen virtuellen Ultraschallbildes auf der Anzeigeeinrichtung.

Durch die Erfindung werden die Nachteile des derzeitigen Stands der Technik aufgehoben. Die Handlichkeit eines Ultraschall-Simulators kann auf ein mobiles Endgerät, vorzugsweise ein Smartphone oder ein Tablet-Computer, reduziert werden. Somit ist der Simulator jederzeit verfügbar, auch während der Freizeit und im privaten örtlichen Umfeld des Lernenden.

Das mobile Endgerät dient dabei gleichzeitig als virtueller Ultraschall-Schallkopf. Dieser Schallkopf wird - entsprechend der realen Untersuchung - durch den Benutzer (den Lernenden) in der Hand gehalten und wie ein realer Schallkopf geführt. Dabei ist das Vorhandensein eines tatsächlich vorhandenen Körpermodells (bspw. eine Torso-Nachbildung) nicht unbedingt erforderlich, vielmehr kann diese ebenfalls virtuell dargestellt werden.

Eine erfindungsgemäße Vorrichtung kann dabei für einen Bruchteil der Kosten eines bisher bekannten Ultraschall-Simulators bereitgestellt werden.

Durch eine mögliche Berechnung virtueller Ultraschallbilder direkt im mobilen Endgerät müssen keine gespeicherten Bilddateien übermittelt werden. Jeder physiologische und physikalische Blickwinkel auf den virtuellen Torso ist möglich. Der Lernende wird somit nicht zwangsweise durch eine Bilddatenbank oder Speicherkapazitäten limitiert.

Selbiges trifft auf die Dauer der Untersuchung und deren Reproduzierbarkeit zu. Durch die Möglichkeit der Darstellung virtueller Modelle ist eine jederzeitige, auch langandauernde 'Untersuchung' möglich. Rücksprachen mit erfahrenen Kollegen und Befunddemonstrationen sind zeitlich sowie räumlich unabhängig möglich. Eine Erfolgskontrolle ist unmittelbar über die Anzeigeeinrichtung (Display) möglich und das Erlernen der motorischen Fähigkeiten durch die jederzeitige Wiederholung deutlich vereinfacht.

Ferner vorgeschlagen wird ein erfindungsgemäßes Verfahren nach Anspruch 7, wonach die Verwendung einer erfindungsgemäßen Vorrichtung zur Durchführung einer Simulation einer Ultraschall-Untersuchung vorgesehen ist.

Ein erfindungsgemäßes Computerprogramm nach Anspruch 14 weist einen Programmcode zur Durchführung der in der erfindungsgemäßen Vorrichtung vorgesehenen Programmschritte und/oder zur Durchführung der Schritte des erfindungsgemäßen Verfahrens auf, wenn das Computerprogramm mittels eines Prozessors, welcher von einem genannten mobilen Endgerät umfasst ist, ausgeführt wird.

Ein erfindungsgemäßes Computerprogrammprodukt nach Anspruch 15 umfasst einen maschinenlesbaren Datenträger, auf dem ein erfindungsgemäßes Computerprogramm in Form von elektronisch auslesbaren Steuersignalen für ein genanntes mobiles Endgerät gespeichert ist.

Wesen und Vorteile dieser weiteren Aspekte der vorliegenden Erfindung ergeben sich dabei bereits aus den obigen Erörterungen anhand der erfindungsgemäßen Vorrichtung, auf welche zur Vermeidung von Wiederholungen verwiesen wird.

Im Folgenden werden sämtliche erfindungsgemäßen Aspekte weiter erörtert, wozu teilweise auf nicht limitierende vorteilhafte Ausgestaltungen und Weiterbildungen der Erfindung Bezug genommen wird. Eine Zusammenstellung von ergänzenden bzw. zusätzlichen, nicht limitierenden, konkreten bevorzugten Ausführungsformen der Erfindung findet sich überdies am Ende der Beschreibung. Auf diese Zusammenstellung wird ausdrücklich verwiesen.

Durch die im Rahmen einer bevorzugten Ausgestaltung mögliche virtuelle Darstellung eines Patienten und eines Ultraschallgerätes können weitere Verbesserungen erreicht werden. Hierzu ist die Simulation des zu untersuchenden Körperteils (bspw. eines Torsos) als virtuelles anatomisches Modell bevorzugt. Dieses Modell kann Informationen zur Schallausbreitung und Weiterleitung einhalten. Das Model selbst kann auf einem realen Bild (sog. Tracker) durch das Display eines genannten mobilen Endgerätes (z.B. Smartphone, Tablet-Computer) simuliert werden.

Das mobile Endgerät, dessen Anzeigeeinrichtung verwendet wird, dient gleichzeitig als virtueller Ultraschall-Schallkopf. Dieser Schallkopf kann - entsprechend der realen Untersuchung - über den virtuellen anatomischen Torso geführt werden. Durch die in den modernen mobilen Endgeräten vorhandenen Sensoren (Licht, Bewegung und Lage) wird eine genaue Bestimmung des Blickwinkels auf einen Tracker ermöglicht. Diese Blickwinkelberechnung ist im Stand der Technik bei "augmented reality"-Anwendungen verfügbar.

Mithilfe eines Darstellungsalgorithmus und unter Benutzung der Informationen des Models kann dann ein Ultraschallbild errechnet und entsprechend auf der Anzeigeeinrichtung (Display) dargestellt werden.

Nach dem derzeitigen Konzept für die Ausbildung von Medizinern werden zur Befunddarstellung gewisse "Normbilder" gefordert. Falls diese jedoch aufgrund von physiologischen oder technischen Problemen nicht angefertigt werden können, kann nur durch Hinzuziehen eines erfahreneren Untersuchers die richtige Diagnose gestellt werden.

Bei derzeit bekannten Vorrichtungen zur Simulation von Ultraschall-Untersuchungen (Ultraschall-Simulatoren) sind die dort in Datenbanken abgelegten Bildfolgen von Ultraschall-"Normbildern" bzw. "Zielbildern" mehr oder weniger lückenhaft in der Darstellung. So sind meistens nur die wichtigsten Bilderfolgen dokumentiert, ungewöhnliche Blickwinkel, wie sie Anfänger/Auszubildende versehentlich einstellen, kommen nicht oder nur selten zu Abbildung. Dies betrifft auch Limitationen, die sich durch die originalen Patientenbilder ergeben. Zudem ist eine flüssige Darstellung der Bildfolgen wie in der Realität durch die Grenzen der vorhandenen Datensätze nicht möglich. Ferner existieren "falsche" Normbilder in der Bilder-Datenbasis nicht und können somit nicht eingespielt werden. So wäre es weiter wünschenswert, keinen technischen Grenzen bzgl. der Darstellung von Befunden im Sinne von vorgegebenen Bilddatenbanken zu begegnen. In einer bevorzugten Weiterbildung der vorliegenden Erfindung erhält der Lernende daher die Möglichkeit, jede Bildeinstellung (Einfallswinkel, Drehwinkel etc.) zu erstellen und hieran die feinmotorischen Bewegungen zu erlernen. Zudem könnten hierdurch die technischen Möglichkeiten des Ultraschallgerätes zur Bildoptimierung (Eindringtiefe, Frequenzwahl, Fokuseinstellung, etc.) erlernt werden.

Im Rahmen weiterer vorteilhafter Ausgestaltungen der Erfindung sind die Implementierung einzelner oder mehrerer Ultraschall-Geräteoptionen wie Frequenz, Fokus, Zoom etc. in der Vorrichtung möglich. Hierdurch können dem Lernenden die technischen Optimierungsmöglichkeiten weiter verdeutlicht und für den Einsatz am Patienten vereinfacht werden.

Weiter vorteilhafte Weiterbildungen betreffen die Simulation von speziellen Untersuchungstechniken, wie z.B. Kontrastmittelultraschall oder Elastographie. Diese Techniken sind in der Realität nur mit speziellen High-End-Geräten durchführbar. Die entsprechende Einarbeitungsphase kann mit der erfindungsgemäßen Vorrichtung bzw. dem erfindungsgemäßen Verfahren verkürzt werden, und die Kompetenz bzgl. neuer Techniken bei real existierenden Ultraschall-Geräten kann unabhängig von dem Vorhandensein eines entsprechenden Geräts erlernt werden.

Um die Realitätsnähe zu einer Ultraschalluntersuchung noch weiter zu erhöhen, ist im Rahmen einer weiteren vorteilhaften Ausgestaltung die Möglichkeit vorgesehen, das mobile Endgerät in ein Cover einzuführen, welches der äußeren Form eines Ultraschall-Handgerätes (Schallkopf) nachempfunden ist. Die Darstellung der virtuellen Ultraschallbilder kann dann ggf. zusätzlich auf einem zweiten Gerät, bspw. einem Handheld-Gerät oder einem Bildschirm (analog dem realen Ultraschall) durchgeführt werden. Hierzu wäre die Übertragung der Bilder von dem mobilen Endgerät (z.B. via BlueTooth) notwendig, wäre jedoch im Stand der Technik verfügbar.

### Ausführungsformen

Ergänzend bzw. zusätzlich zu den bereits erörterten vorteilhaften Ausgestaltungen und Weiterbildungen wird die Erfindung nachfolgend anhand weiterer konkreter bevorzugter Ausführungsformen beschrieben, welche die Erfindung jedoch nicht auf die beschriebenen Ausführungsformen einschränken.
Ausführungsform 1: Vorrichtung zur Durchführung einer Simulation einer Ultraschall-Untersuchung, wobei die Vorrichtung ein mobiles Endgerät aufweist, und wobei das mobile Endgerät umfasst: eine Eingabeeinrichtung und eine Anzeigeeinrichtung; einen Bewegungssensor; einen Speicher; einen Prozessor; ein Computerprogramm, welches in den Speicher des mobilen Endgeräts geladen ist, und welches im Betrieb der Vorrichtung durch den Prozessor mit den folgenden Schritten ausgeführt wird: durch den Bewegungssensor erfolgende Bestimmung der derzeitigen Lage und der derzeitigen Bewegung der in der Hand eines Benutzers gehaltenen und damit geführten Vorrichtung; Erzeugen eines aktuellen virtuellen Ultraschallbildes abhängig von der derzeitigen Lage und/oder der derzeitigen Bewegung der Vorrichtung und/oder einer aktuellen Eingabe seitens des Benutzers; Anzeige des aktuellen virtuellen Ultraschallbildes auf der Anzeigeeinrichtung.
Ausführungsform 2: Vorrichtung nach Ausführungsform 1, wobei die Eingabeeinrichtung und die Anzeigeeinrichtung integral ausgeführt sind
Ausführungsform 3: Vorrichtung nach Ausführungsform 2, wobei die die Eingabeeinrichtung und die Anzeigeeinrichtung von einem Touchscreen umfasst sind.
Ausführungsform 4: Vorrichtung nach einer oder mehreren der vorangegangenen Ausführungsformen, wobei die Eingabeeinrichtung weitere Mittel umfasst, insbesondere vorgegebene Bedienfelder und/oder Tasten, und insbesondere eine Home-Taste oder eine Lautstärketaste oder eine An/Aus-Taste des mobilen Endgeräts.
Ausführungsform 5: Vorrichtung nach einer oder mehreren der vorangegangenen Ausführungsformen, wobei die Vorrichtung weitere Mittel umfasst, mit denen einem Benutzer während des Betriebs der Vorrichtung Rückmeldungen auf die Lage und/oder die Bewegung der Vorrichtung und/oder aktuelle Eingaben bereitstellbar sind, insbesondere mittels Tonsignalen und/oder durch Vibrieren und/oder durch zusätzliche, von der Anzeigeeinrichtung gesonderte Anzeigen, insbesondere durch LED-Anzeigen.
Ausführungsform 6: Vorrichtung nach einer oder mehreren der vorangegangenen Ausführungsformen, wobei das mobile Endgerät ein Smartphone oder ein Tablet-Computer ist.
Ausführungsform 7: Vorrichtung nach einer oder mehreren der vorangegangenen Ausführungsformen, wobei der Schritt des Erzeugens eines aktuellen virtuellen Ultraschallbildes die Berechnung eines virtuellen Ultraschallbildes aufweist.
Ausführungsform 8: Vorrichtung nach einer oder mehreren der vorangegangenen Ausführungsformen, wobei die Vorrichtung ferner eine Hülle aufweist, welche die äußere Form eines herkömmlichen Ultraschall-Schallkopfes aufweist, wobei das mobile Endgerät in der Hülle angeordnet ist.
Ausführungsform 9: Vorrichtung nach Ausführungsform 8, wobei die Hülle Bedienelemente eines herkömmlichen Ultraschall-Schallkopfes aufweist, wobei zwischen den Bedienelementen und der Eingabeeinrichtung des mobilen Endgeräts eine funktionale Verbindung hergestellt ist.
Ausführungsform 10: Verfahren zur Durchführung einer Simulation einer Ultraschall-Untersuchung, wobei eine Vorrichtung nach einer oder mehreren der vorangegangenen Ausführungsformen verwendet wird.
Ausführungsform 11: Verfahren nach Ausführungsform 10, wobei eine im Betrieb befindliche Vorrichtung nach einer oder mehreren der Ausführungsformen 1 bis 9 seitens eines Benutzers wie ein herkömmlicher Ultraschall-Schallkopf mit der Hand gehalten und geführt wird.
Ausführungsform 12: Verfahren nach Ausführungsform 10 oder 11, wobei das Verfahren die folgenden Schritte umfasst: durch den Bewegungssensor des mobilen Endgeräts erfolgende Bestimmung der derzeitigen Lage und der derzeitigen Bewegung der in der Hand eines Benutzers gehaltenen und damit geführten Vorrichtung; Erzeugen eines aktuellen virtuellen Ultraschallbildes abhängig von der derzeitigen Lage der Vorrichtung und/oder der derzeitigen Bewegung der Vorrichtung und/oder einer aktuellen Eingabe seitens des Benutzers; Anzeige des aktuellen virtuellen Ultraschallbildes auf der Anzeigeeinrichtung des mobilen Endgeräts. Ausführungsform 13: Verfahren nach einer oder mehreren der Ausführungsformen 10 bis 12, wobei zum Erzeugen eines aktuellen virtuellen Ultraschallbildes aktuelle virtuelle Ultraschallbilder in dem mobilen Endgerät der Vorrichtung, insbesondere in dem Prozessor des mobilen Endgeräts, berechnet werden.
Ausführungsform 14: Verfahren nach Ausführungsform 13, wobei zur Berechnung von aktuellen virtuellen Ultraschallbildern nicht auf gespeicherte Normbilder und/oder eine Bilder-Datenbank zugegriffen wird.
Ausführungsform 15: Verfahren nach einer oder mehreren der Ausführungsformen 10 bis 14, wobei aktuelle virtuelle Ultraschallbilder abhängig von der Winkelneigung der Vorrichtung und/oder dem Abstand der Vorrichtung zu einem Bezugspunkt und/oder wahlweise in mehreren Ultraschallebenen erzeugt werden.
Ausführungsform 16: Verfahren nach einer oder mehreren der Ausführungsformen 10 bis 15, wobei als Gegenstand der simulierten Ultraschall-Untersuchung ein virtuelles anatomisches Modell anstelle eines körperlich vorhandenen Modells, insbesondere eines Torso-Modells, verwendet wird.
Ausführungsform 17: Verfahren nach einer oder mehreren der Ausführungsformen 10 bis 16, wobei als Gegenstand der simulierten Ultraschall-Untersuchung ein virtuelles anatomisches Modell, insbesondere ein Modell eines Körpers oder eines Körperteils, und insbesondere innerhalb der Vorrichtung, bereitgestellt und auf der Anzeigeeinrichtung dargestellt wird.
Ausführungsform 18: Verfahren nach Ausführungsform 16 oder 17, wobei das virtuelle anatomische Modell Werte für die Schallausbreitung und Schallweiterleitung vorgibt, welche an die fallweise dargestellte Körperregion angepasst sind.
Ausführungsform 19: Verfahren nach einer oder mehreren der Ausführungsformen 16 bis 18, wobei das virtuelle anatomische Modell oder ein Ausschnitt hiervon in einem Hauptrechner abgespeichert ist oder erzeugt wird.
Ausführungsform 20: Verfahren nach Ausführungsform 19, wobei das virtuelle anatomische Modell oder ein Ausschnitt hiervon im Vorfeld, zu Beginn oder während des Verfahrens, vorzugsweise mittels drahtloser Datenübertragung, an die Vorrichtung übertragen wird.
Ausführungsform 21: Verfahren nach einer oder mehreren der Ausführungsformen 10 bis 20, wobei die relative Lage der Vorrichtung in Bezug auf ein virtuelles anatomisches Modell zu Beginn des Verfahrens mittels eines im Griffbereich des Benutzers positionierten Trackers kalibriert wird, insbesondere wobei eine der Vorrichtung zugeordnete Kamera verwendet wird, welche den Tracker abtastet.
Ausführungsform 22: Verfahren nach Ausführungsform 21, wobei als Tracker ein Computerausdruck verwendet wird.
Ausführungsform 23: Verfahren nach einer oder mehreren der Ausführungsformen 10 bis 22, wobei Verlaufsdaten von durchgeführten Simulationen gespeichert werden und/oder wobei Verlaufsdaten von durchgeführten Simulationen - online oder offline - an einen weiteren Rechner übertragen werden, und zwar insbesondere zur Bewertung oder Korrektur der durchgeführten Simulation.
Ausführungsform 24: Computerprogramm mit Programmcode zur Durchführung der gemäß Ausführungsform 1 angegebenen Programmschritte, und/oder zur Durchführung der Schritte eines Verfahrens nach einer der Ausführungsformen 10 bis 23, wenn das Computerprogramm mittels eines Prozessors, welcher von einem mobilen Endgerät, und insbesondere von einem mobilen Endgerät einer Vorrichtung nach einer der Ausführungsformen 1 bis 9, umfasst ist, ausgeführt wird.
Ausführungsform 25: Computerprogramm nach Ausführungsform 24, wobei das Computerprogramm ein Anwendungsprogramm (App) ist.
Ausführungsform 26: Computerprogrammprodukt, umfassend einen maschinenlesbaren Datenträger, auf dem ein Computerprogramm nach Ausführungsform 24 oder 25 in Form von elektronisch auslesbaren Steuersignalen für ein mobiles Endgerät, insbesondere für ein mobiles Endgerät einer Vorrichtung nach einer der Ausführungsformen 1 bis 9, gespeichert ist.
Ausführungsform 27: Verwendung eines mobilen Endgeräts, insbesondere eines Smartphones oder eines Tablet-Computers, als Vorrichtung oder als Teil einer Vorrichtung zur Durchführung einer Simulation einer Ultraschall-Untersuchung. Ausführungsform 28: Verfahren zur Durchführung einer Simulation einer Ultraschall-Untersuchung, wobei ein mobiles Endgerät, insbesondere eine Smartphone oder ein Tablet-Computer, als virtueller Ultraschall-Schallkopf verwendet wird.
Ausführungsform 29: Verfahren zur Durchführung einer Simulation einer Ultraschall-Untersuchung, wobei aktuelle virtuelle Ultraschallbilder abhängig von der derzeitigen Lage und/oder der derzeitigen Bewegung eines virtuellen Ultraschall-Schallkopfes und/oder abhängig von einer aktuellen Eingabe seitens des Benutzers erzeugt und angezeigt werden, und wobei aktuelle virtuelle Ultraschallbilder berechnet werden, und insbesondere wobei nicht auf gespeicherte Normbilder und/oder eine Bilder-Datenbank zugegriffen wird.
Ausführungsform 30: Verfahren nach Ausführungsform 29, wobei das Verfahren die zusätzlichen Merkmale einer oder mehrerer der Ausführungsformen 16 bis 19 aufweist.

## Patentansprüche

1. Vorrichtung zur Durchführung einer Simulation einer Ultraschall-Untersuchung, **dadurch gekennzeichnet, dass** die Vorrichtung ein mobiles Endgerät aufweist, wobei das mobile Endgerät umfasst:
- eine Eingabeeinrichtung und eine Anzeigeeinrichtung,
- einen Bewegungssensor,
- einen Speicher,
- einen Prozessor,
- ein Computerprogramm, welches in den Speicher des mobilen Endgeräts geladen ist, und welches im Betrieb der Vorrichtung durch den Prozessor mit den folgenden Schritten ausgeführt wird:
- Durch den Bewegungssensor erfolgende Bestimmung der derzeitigen Lage und der derzeitigen Bewegung der in der Hand eines Benutzers gehaltenen und damit geführten Vorrichtung,
- Erzeugen eines aktuellen virtuellen Ultraschallbildes abhängig von der derzeitigen Lage und/oder der derzeitigen Bewegung der Vorrichtung und/oder einer aktuellen Eingabe seitens des Benutzers,
- Anzeige des aktuellen virtuellen Ultraschallbildes auf der Anzeigeeinrichtung.

2. Vorrichtung nach Anspruch 1, **dadurch gekennzeichnet, dass** das mobile Endgerät ein Smartphone oder ein Tablet-Computer ist.

3. Vorrichtung nach Anspruch 1 oder 2, **dadurch gekennzeichnet, dass** der Schritt des Erzeugens eines aktuellen virtuellen Ultraschallbildes die Berechnung eines virtuellen Ultraschallbildes aufweist.

4. Vorrichtung nach einem der Ansprüche 1 bis 3, **dadurch gekennzeichnet, dass** die Vorrichtung weitere Mittel umfasst, mit denen einem Benutzer während des Betriebs der Vorrichtung Rückmeldungen auf die Lage und/oder die Bewegung und/oder aktuelle Eingaben bereitstellbar sind, insbesondere mittels Tonsignalen und/oder durch Vibrieren und/oder durch zusätzliche, von der Anzeigeeinrichtung gesonderte Anzeigen, insbesondere durch LED-Anzeigen.

5. Vorrichtung nach einem der Ansprüche 1 bis 4, **dadurch gekennzeichnet, dass** die Vorrichtung ferner eine Hülle aufweist, welche die äußere Form eines herkömmlichen Ultraschall-Schallkopfes aufweist, wobei das mobile Endgerät in der Hülle angeordnet ist.

6. Vorrichtung nach Anspruch 5, **dadurch gekennzeichnet, dass** die Hülle Bedienelemente eines herkömmlichen Ultraschall-Schallkopfes aufweist, wobei zwischen den Bedienelementen und der Eingabeeinrichtung des mobilen Endgeräts eine funktionale Verbindung hergestellt ist.

7. Verfahren zur Durchführung einer Simulation einer Ultraschall-Untersuchung, **dadurch gekennzeichnet, dass** eine Vorrichtung nach einem der Ansprüche 1 bis 6 verwendet wird.

8. Verfahren nach Anspruch 7, **dadurch gekennzeichnet, dass** eine im Betrieb befindliche Vorrichtung nach einem der Ansprüche 1 bis 6 seitens eines Benutzers wie ein herkömmlicher Ultraschall-Schallkopf mit der Hand gehalten und geführt wird.

9. Verfahren nach Anspruch 7 oder 8, **gekennzeichnet durch** die Schritte:
- **Durch** den Bewegungssensor des mobilen Endgeräts erfolgende Bestimmung der derzeitigen Lage und der derzeitigen Bewegung der in der Hand eines Benutzers gehaltenen und damit geführten Vorrichtung,
- Erzeugen eines aktuellen virtuellen Ultraschallbildes abhängig von der derzeitigen Lage und/oder der derzeitigen Bewegung der Vorrichtung und/oder einer aktuellen Eingabe seitens des Benutzers,
- Anzeige des aktuellen virtuellen Ultraschallbildes auf der Anzeigeeinrichtung des mobilen Endgeräts.

10. Verfahren nach Anspruch 9, **dadurch gekennzeichnet, dass** aktuelle virtuelle Ultraschallbilder in dem mobilen Endgerät der Vorrichtung, insbesondere in dem Prozessor des mobilen Endgeräts, berechnet werden.

11. Verfahren nach einem der Ansprüche 7 bis 10, **dadurch gekennzeichnet, dass** als Gegenstand der simulierten Ultraschall-Untersuchung ein virtuelles anatomisches Modell, insbesondere eines Körpers oder eines Körperteils, und insbesondere innerhalb der Vorrichtung, bereitgestellt und auf der Anzeigeeinrichtung dargestellt wird.

12. Verfahren nach Anspruch 11, **dadurch gekennzeichnet, dass** das virtuelle anatomische Modell Werte für die Schallausbreitung und Schallweiterleitung vorgibt, welche an die fallweise dargestellte Körperregion angepasst sind.

13. Verfahren nach Anspruch 11 oder 12, **dadurch gekennzeichnet, dass** das virtuelle anatomische Modell oder ein Ausschnitt hiervon in einem Hauptrechner abgespeichert ist oder erzeugt wird, und zu Beginn oder während des Verfahrens mittels drahtloser Datenübertragung an die Vorrichtung übertragen wird.

14. Computerprogramm mit Programmcode zur Durchführung der gemäß Anspruch 1 angegebenen Programmschritte,
und/oder zur Durchführung der Schritte eines Verfahrens nach einem der Ansprüche 7 bis 13,
wenn das Computerprogramm mittels eines Prozessors, welcher von einem mobilen Endgerät, und insbesondere von einem mobilen Endgerät einer Vorrichtung nach einem der Ansprüche 1 bis 6, umfasst ist, ausgeführt wird.

15. Computerprogrammprodukt, umfassend einen maschinenlesbaren Datenträger, auf dem ein Computerprogramm nach Anspruch 14 in Form von elektronisch auslesbaren Steuersignalen für ein mobiles Endgerät, insbesondere für ein mobiles Endgerät einer Vorrichtung nach einem der Ansprüche 1 bis 6, gespeichert ist.
